# EUROPÄISCHE PATENTSCHRIFT

(11) **EP 0 447 822 B1**
(45) Veröffentlichungstag und Bekanntmachung des Hinweises auf die Patenterteilung: **15.12.1993**
(21) Anmeldenummer: 91102397.6
(22) Anmeldetag: 20.02.1991
(51) Int. Cl.: A01K 1/00

(54) **Liegebox-Aufstallung**
Livestock cubicle
Stalle pour bovins

(30) Priorität: 23.03.1990 DE 4009469
(43) Veröffentlichungstag der Anmeldung: 25.09.1991
(73) Patentinhaber: Kristen, Wilhelm, D-87733 Markt Rettenbach (DE)
(72) Erfinder: Kristen, Wilhelm, D-87733 Markt Rettenbach (DE)
(74) Vertreter: Hieke, Kurt

(56) Entgegenhaltungen:
- DE-A- 2 518 643
- DE-A- 3 636 319
- DE-U- 8 900 913
- US-A- 3 734 059
- LANDBOUW MECHANISATIE. Bd. 39, Nr. 2, Februar 1988, WAGENINGEN NL Seiten 28 - 29; W.SCHERPHOF: 'STALINRICHTINGENGSNIEUWS VAN DE LANDBOUW RAI'

## Beschreibung

Die Erfindung bezieht sich auf eine Liegebox-Aufstallung gemäß dem Oberbegriff des Patentanspruchs 1.

Bei den bekannten Liegebox-Aufstallungen dieser Art ist der Trennbügel, der gewöhnlich die Form eines langgestreckten U mit zum Boxenboden parallelen Schenkeln aufweist, starr mit dem Ständer verbunden. Der starre Trennbügel kann die Tiere, insbesondere beim Aufstehen, behindern, und sie können sich auch daran verletzen. Die aus dem Ständer und dem Trennbügel bestehende starre Einheit muß auch sehr massiv ausgeführt werden, um unter den großen Drehmomenten, die entstehen können, wenn ein Tier seitwärts gegen den Trennbügel drückt, nicht verbogen zu werden, wobei sich das Drehoment bei einer gegebenen Krafteinwirkung um so stärker auswirkt, je weiter die Angriffsstelle der Kraft entlang des Trennbügels vom Ständer entfernt ist. Da die Tiere beim Aufstehen erst mit der Hinterhand hochkommen, sind die Verhältnisse hinsichtlich Beanspruchung und Verletzungsgefahr hierbei besonders groß.

Es ist bereits bekannt, den vom Ständer entfernten Endbereich des Trennbügels gegenüber dem restlichen Bügelteil zur Seite elastisch nachgiebig zu gestalten. Damit wird aber im wesentlichen nur ein gewisser Schutz für die an den freien Stirnseiten der Liegeboxen vorbeigehenden Tiere und für das vom Gang her in eine Liegebox einbiegende Tier erreicht, nicht aber die oben geschilderte grundsätzliche Verletzungsgefahr für das sich in der Liegebox aufhaltende Tier und die Gefahr einer übermässigen Beanspruchung von Bügel und Ständer beseitigt.

Aus der US-A- 3734059 ist eine Vorrichtung zum paarweisen Einsperren von Tieren, insbesondere unruhigen Tieren, auf einem Standplatz vor einem Freßgitter bekannt, die jeweils zwischen zwei benachbarten Standplätzen eine Bügeleinheit mit zwei im Abstand nebeneinander befindlichen Bügeln aufweist, die zwischen sich einen ausreichenden Raum für die die Arbeit durchführende Person freihalten. Die Bügel jeder Bügeleinheit sind gemeinsam um eine zum Stallboden und zum Freßgitter parallele Achse zwischen einer abgesenkten Einsperrstellung zum Einsperren der Tiere auf dem Standplatz und einer hochgeschwenkten Einlaßstellung, in der die Tiere von außen Zugang zum Standplatz haben, verschwenkbar. Bei einer Ausführungsform der bekannten Vorrichtung ist jeder Bügel einer Bügeleinheit an seinem freßgitternahen Ende in der Einsperrstellung um eine vertikale Achse verschwenkbar, dabei aber zwangsweise so gehalten, daß er aus der Sicherungsposition für die sich zwischen den Bügeln der Bügeleinheit aufhaltende Person nur zum Tier hin, nicht aber auch vom Tier weg auf die Person zu bewegt werden kann. Dadurch ist zum einen gewährleistet, daß die beiden Bügel einer Bügeleinheit für die die Tiere behandelnde Person den gewünschten Freiraum sichern, von dem jedes der beiden benachbarten Tiere zwangsweise ferngehalten wird, und zum anderen die Möglichkeit geschaffen, daß die Person einem standeinwärts ausweichenden Tier folgen kann, wenn dieses Tier bezüglich der Tiergröße, für die der Standplatz maximal bemessen ist, kleiner ist und damit die Möglichkeit hat auf dem Standplatz vom Bügel weg standplatzeinwärts zurückzutreten. In den Seilzug zum Heben des jeweiligen Bügels aus der Einsperrstellung in die Einlaßstellung ist eine Feder eingebaut, die die Längenveränderung des Zugstranges bei der Nachfolgebewegung des Bügels ausgleicht.

Der Erfindung liegt die Aufgabe zugrunde, eine Liegebox-Aufstallung gemäß dem Oberbegriff des Patentanspruchs 1 zu schaffen, bei der die Gefahr, daß sich ein in der Liegeboxe aufhaltendes Tier insbesondere beim Aufstehen verletzt oder die aus dem Trennbügel und dem Ständer bestehende Trennvorrichtung zur benachbarten Liegebox beschädigt, gebannt ist.

Die vorstehende Aufgabe wird durch die Merkmale des Patentanspruchs 1 gelöst.

Bei der erfindungsgemäßen Liegebox-Aufstallung kann der Trennbügel über seine ganze Länge mit fortschreitendem Ausmaß zum freien Trennbügelende hin seitwärts gegen Federkraft ausweichen, wenn ein Tier dagegendrückt. Dadurch besteht auch wenn ein Tier aufsteht keine Gefahr mehr, daß es sich verletzt, wenn es mit der Hinterhand weitgehend unkontrolliert hochkommt, und es entstehen auch keine großen Drehmomente insbesondere bei der bisher besonders gefährdeten Verbindung zwischen dem Trennbügel und dem Ständer. Die Federkraft kann aber dennoch so eingerichtet werden, daß die Funktion des Trennbügels als Abteilungsorgan zur benachbarten Liegebox in einem völlig ausreichenden Ausmaß erhalten bleibt.

Die Unteransprüche haben bevorzugte Ausführungsformen der Liegebox-Aufstallung gemäß Patentanspruch 1 zum Gegenstand. Von ganz besonderem Vorteil ist hier die Maßnahme gemäß Patentanspruch 2, die es dem Bügel ermöglicht, nicht nur zur Seite sondern auch nach oben in fortschreitendem Ausmaß vom Ständer weg auszuweichen, wenn ein Tier von unten oder mit einer Kraftkomponente von unten dagegendrückt, was insbesondere wiederum häufig der Fall ist, wenn ein Tier aufsteht.

Die Erfindung wird nachstehend anhand der Zeichnung an Ausführungsbeispielen noch näher erläutert. In der Zeichnung zeigt:
- Fig. 1: eine erste Ausführung einer Liegebox-Aufstallung bzw. der Trennvorrichtung zwischen den einzelnen Liegeboxen in Ansicht von der Seite,
- Fig. 2: den Querschnitt entlang der Schnittlinie A - B in Fig. 1 durch einen Teil der Trennvorrichtung,
- Fig. 3: den Querschnitt entlang der Schnittlinie C - D in Fig. 1 durch einen Teil der Trennvorrichtung,
- Fig. 4: eine vergrößerte Querschnittsansicht entlang der Schnittlinie E - F in Fig.2 von einem Teil der Trennvorrichtung gemäß Fig.1,
- Fig. 5: eine Abwandlung der Ausführungsform der Trennvorrichtung gemäß Fig. 1 in der Fig. 2 entsprechender Darstellung, und
- Fig. 6: die Abwandlung gemäß Fig. 5 in der Fig.4 entsprechender Darstellung.

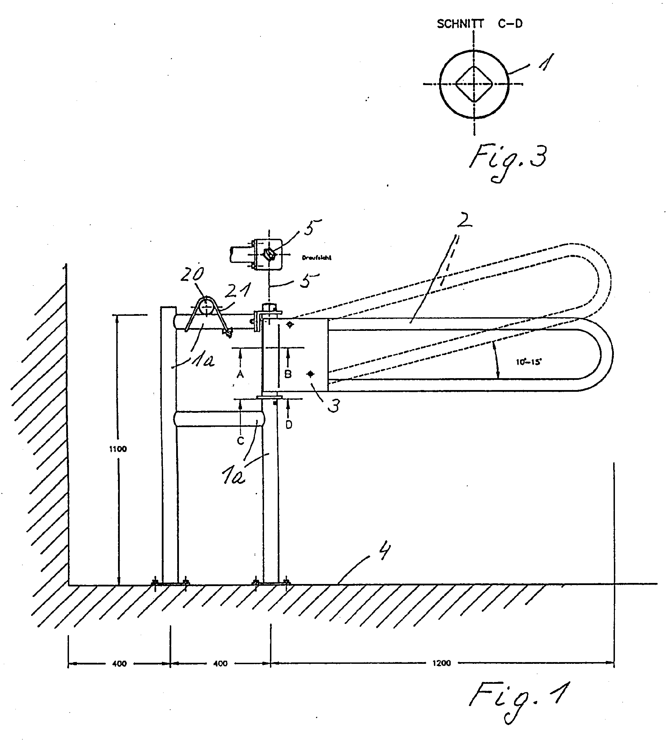

Die in Fig 1 bis Fig. 4 dargestellte Trennvorrichtung, die zum Abgrenzen der einzelnen, in Richtung senkrecht zur Zeichenebene der Fig. 1 nebeneinander befindlichen Liegeplätze der Aufstallung zwischen je zwei benachbarten Liegeplätzen angeordnet ist, weist einen Ständer 1, einen Trennbügel 2 und eine Schwenkhalterung 3 auf, mit der der Trennbügel 2 um eine zum Boden 4 der Liegebox senkrechte Schwenkachse 5 gegen Federkraft schwenkbar mit dem Ständer 1 verbunden ist.

Der Ständer 1 ist beim tierkopfseitigen Ende der Liegebox am Boden 4 befestigt und besteht aus starr miteinander verbundenen, z.B. zusammengeschweißten, Rohren 1a. Das in Fig. 1 rechts zu sehende vertikale Ständerrohr 1a besteht über etwas mehr als die Höhe des Trennbügels 2 aus einem Vierkant-Innenrohrabschnitt 6 von quadratischem Querschnitt, das mit dem übrigen Teil des Ständers 1 starr aber lösbar, vorzugsweise steckbar, verbunden ist und dessen Längsmittelachse zum Boden 4 senkrecht ausgerichtet ist. Der Vierkant-Innenrohrabschnitt 6 ist drehbar von einem Vierkant-Außenrohrabschnitt 7 umgeben, der kürzer ist als der Vierkant-Innenrohrabschnitt 6 aber ebenfalls über etwas mehr als die Höhe des Trennbügels 2 reicht. Der Vierkant-Innenrohrabschnitt 7 nimmt bezüglich des Ständers 1 eine solche Winkelstellung ein, daß sich seine eine Diagonale senkrecht zur Zeichenebene der Fig. 1 erstreckt, d.h. seine andere Diagonale parallel zur Längsrichtung der Liegebox liegt.

Zwischen die Ecken des Vierkant-Außenrohrabschnitts 7 und die diesen jeweils gegenüberliegenden Seiten des Vierkant-Innenrohrabschnitts 6 sind sich etwa über die Höhe des ersteren erstreckende Stücke 8 aus gummielastischem Material eingefügt, die diese Rohrabschnitte elastisch in der in Fig.2 besonders anschaulich zu erkennenden Relativstellung halten, in der zwei gegenüberliegende Außenflächen 7a des Vierkant-Außenrohabschnitts 7 sich parallel zu einer zur Längsrichtung der Liegebox parallelen und zum Boden 4 senkrechten Ebene, d.h. parallel zur Zeichenebene der Fig 1, erstrecken. An diesen Fächen 7a sind gabelartig zwei Platten 9 der Schwenkhalterung 3 befestigt, zu der auch der Vierkant-Außenrohrabschnitt 7 gehört.

Der Trennbügel 2 hat die Form eines langgestreckten U und weist zwei zueinander parallele Schenkel 2a auf, die an ihren ständernahen Enden durch ein U-Profilstück 10 von dem Außendurchmesser der Schenkel 2a entsprechender Breite starr miteinander verbunden sind. Das U-Profilstück 10 und die daran ansetzenden Schenkel 2a passen mit Gleitspiel zwischen die Platten 8 der Schwenkhalterung 3 und sind so zwischen diesen parallel zu den Außenflächen 7a des Vierkant-Außenrohabschnitts 7 geführt.

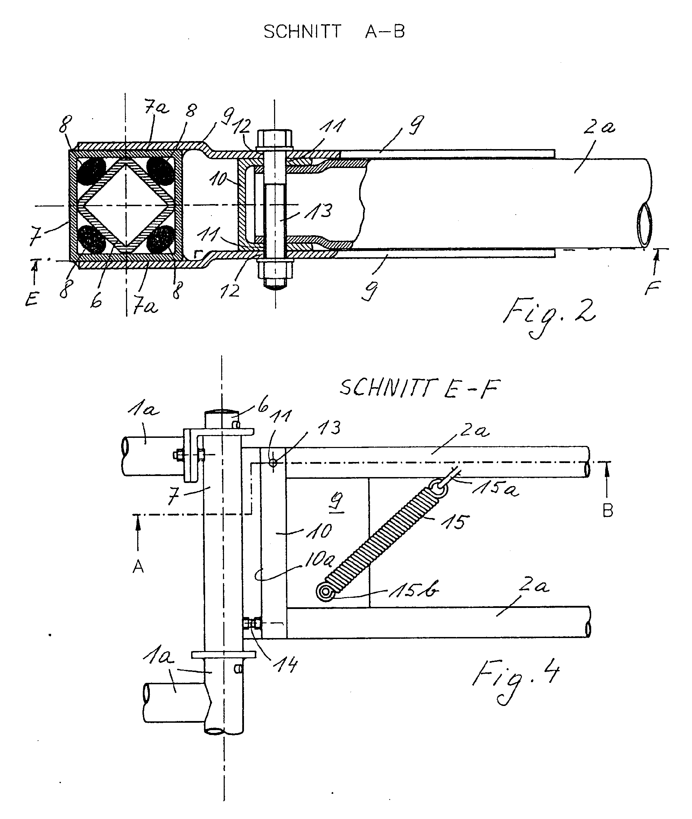

Das Profilstück 10 weist in der Nähe seines vom Boden 4 abgewendeten Endes eine auch das Ende des darunter befindlichen oberen Bügelschenkels 2a durchsetzende Querbohrung 11 auf, die mit Querbohrungen 12 in den Platten 9 der Schwenkhalterung 3 fluchtet. Durch die Qerbohrungen 11 und 12 ersteckt sich ein Bolzen 13, um den der Bügel 2 mit dem Profilstück 10 parallel zu der oben genannten Ebene, d.h. parallel zur Zeichenebene der Fig 1 und 4, zwischen den Platten 9 geführt drehbar ist. In der Nähe des bodenseitigen Endes des Profilstückes 10 befidet sich an dessen dem Vierkant-Außenrohrabschnitt 7 zugewendeten Steg 10a eine Anschlagschraube 14 einstellbarer Länge, über die der Bügel 2 an diesem Außenrohrabschnitt 7 in seiner normalen, mittels dieser Schraube 14 justierbaren Gebrauchsstellung, in der sich seine Schenkel 2a vorzugsweise parallel zum Boden 4 erstrecken, abgestützt ist. Eine in Fig.4 zu sehende Zugfeder 15, die zwischen ein Befestigungsmittel 15a am oberen Bügelschenkel 2a und ein Befestigungsmittel 15b an den Platten 9 der Schwenkhalterung 3 gespannt ist, sucht den Bügel 2 in seine Gebrauchsstellung niederzuhalten.

Der Bügel 2 ist somit gegen Federkraft zum einen um die zum Boden 4 senkrechte Mittelachse des Vierkant-Innenrohrabschnitts 6 bezüglich der Zeichenebene der Fig.1 seitwärts und zum anderen um die Mittelachse des Bolzens 13 parallel zu seiner Ebene aufwärts aus seiner normalen Gebrauchstellung verschwenkbar und vermag unter vom Tier auf ihn ausgeübten Kräften zur Vermeidung von Verletzungen der Tiere und einer übermäßigen Beanspruchung seiner selbst elastisch auszuweichen.

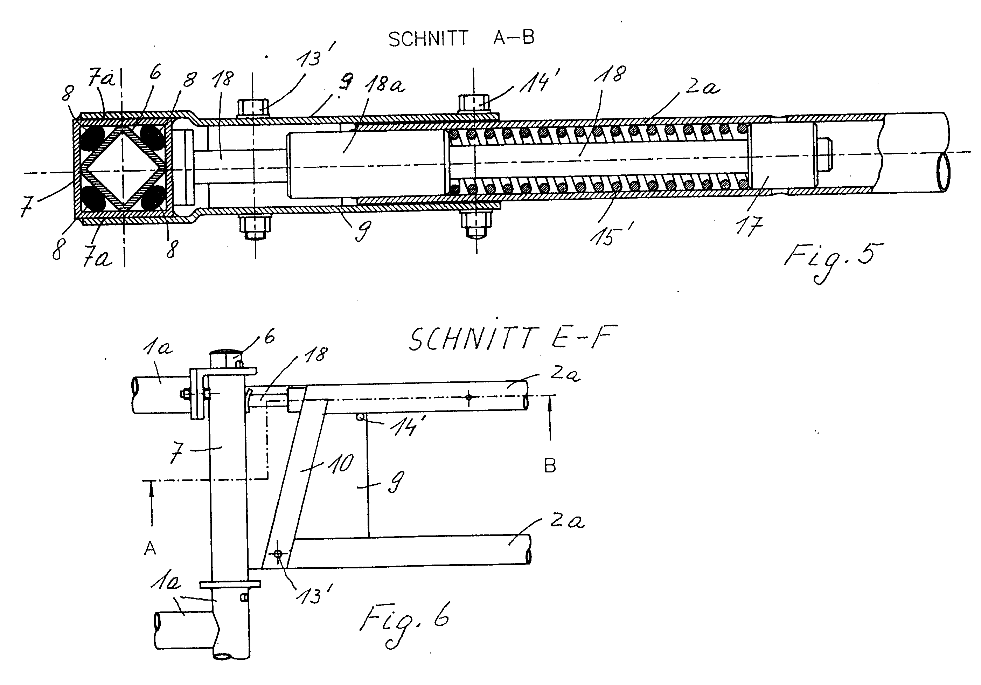

Die Ausführungsform nach Fig. 5 und 6 unterscheidet sich von derjenigen gemäß Fig. 1 bis 4 dadurch, daß der Bügel 2 hier bei seinem unteren Schenkel 2a zwischen den Platten 9 um einen Bolzen 13' drehbar gelagert ist, die dieser Verschwenkbarkeit entgegenwirkende Federkraft durch eine in den oberen Schenkel 2a des Bügels 2 eingebaute Druckfeder 15' erzeugt wird und die Gebrauchsstellung des Bügels 2 durch einen sich zwischen den Platten 9 erstreckenden, an diesen befestigten Anschlagstift 14' festgelegt ist, auf dem der obere Schenkel 2a des Bügels 2 im Abstand vom Bolzen 13' nach oben abhebbar aufliegt. Die Druckfeder 15' stützt sich mit einem Ende an einem im Bügelschenkel 2a befestigten Widerlager 17 und mit dem anderen Ende an einem Druckstück 18 ab, das das Widerlager 17 gleitbar gefürt durchsetzt und im Abstand hiervon mittels eines Führungsbundes 18a auch noch an der Innenwandung des Bügelschenkels 2a geführt ist. Das Druckstück 18 drückt mit seinem freien Ende außerhalb des oberen Bügelschenkels 2a gegen eine Stützfläche am Vierkant-Außenrohrabschnitt 7 und hält so den Bügel 2 gegen den Anschlagstift 14' federnd nieder.

Die Ausweichmöglichkeiten für den Bügel 2 sind bei der Ausführungsform nach Fig. 5 und 6 die gleichen wie bei der Ausführungsform nach Fig. 1 bis 4.

## Patentansprüche

1. Liegebox-Aufstallung für Großvieh, insbesondere Kühe, bei der die nebeneinander befindlichen Liegeplätze für die Tiere jeweils mittels einer Trennvorrichtung gegeneinander abgegrenzt sind, die aus einem beim tierkopfseitigen Liegeboxende am Stallboden (4) befestigten, von diesem nach oben ragenden Ständer (1) und einem an diesem angebrachten Trennbügel (2) besteht, der sich in seiner normalen Gebrauchsstellung im Abstand über dem Stallboden (4) in einer zu diesem senkrechten sowie zur Längsrichtung des Liegeplatzes im wesentlichen parallelen Ebene über einen großen Teil der Länge des Liegeplatzes erstreckt, **dadurch** **gekennzeichnet,** daß jeder Trennbügel (2) ständerseitig um eine zum Stallboden (4) im wesentlichen senkrechte Schwenkachse (5) verschwenkbar an dem Ständer (1) gelagert und durch eine für die Aufrechterhaltung der Funktion des Trennbügels (2) als Abteilungsorgan zwischen den benachbarten Liegeplätzen bemessene Federkraft (8) in seiner normalen Gebrauchsstellung gehalten ist, und daß jeder Trennbügel gegen diese Federkraft zu beiden Seiten hin aus dieser Gebrauchsstellung herausschwenkbar ist.

2. Liegebox-Aufstallung nach Anspruch 1, **dadurch gekennzeichnet,** daß die Halterung (3) einen starr mit dem Ständer (1) verbundenen Vierkant-Innenrohrabschnitt (6) von quadratischem Querschnitt sowie einen diesen drehbar umgebenden, quadratischen Vierkant-Aussenrohrabschnitt (7), an dem der Bügel (2) angebracht ist, aufweist, wobei die Seitenhalbierenden des Vierkant-Außenrohrabschnitts (7) mit den Winkelhalbierenden des Vierkant-Innenrohrabschnitts (6) in der der normalen Gebrauchsstellung des Trennbügels (2) entsprechenden Relativstellung dieser Vierkantrohrabschnitte (6,7) zusammenfallen und die Vierkantrohrabschnitte (6,7) durch zwischen die Ecken des Vierkant-Außenrohrabschnitts (7) und die jeweils gegenüberliegenden Seiten des Vierkant-Innenrohrabschnitts (6) eingelegte Stücke (8) aus gummielastischem Material federnd in dieser Relativstellung gehalten sind.

3. Liegebox-Aufstallung nach Anspruch 1, **dadurch gekennzeichnet,** daß die Halterung eine an einem Ende bezüglich des Ständers festgelegte und am anderen Ende mit ihr verbundene, die Schwenkachse vorgebende Torsionsachse aufweist.

4. Liegebox-Aufstallung nach einem oder mehreren der vorhergehenden Ansprüche, **dadurch gekennzeichnet,** daß der Trennbügel (2) des weiteren um eine zum Stallboden (4) im wesentlichen parallele Drehachse (13,13') gegen Federkraft (15,15') parallel zu seiner Ebene aus seiner normalen Gebrauchsstellung heraus hochschwenkbar ist.

5. Liegebox-Aufstallung nach Anspruch 4, **dadurch gekennzeichnet**, daß der Trennbügel (2) um die Drehachse (13,13') drehbar sowie parallel zu seiner Ebene geführt an der Halterung gelagert und durch eine zwischen ihn und die Halterung (3) eingebaute Feder (15,15') gegen einen Anschlag (14,14') in seiner normalen Gebrauchsstellung gehalten ist.

6. Liegebox-Aufstallung nach Anspruch 5, **dadurch gekennzeichnet,** daß die Feder eine sich zwischen dem oberen Schenkel (2a) des Trennbügels (2) und der Halterung (3) erstreckende Zugfeder (15) ist.

7. Liegebox-Aufstallung nach Anspruch 5, **dadurch gekennzeichnet,** daß die Feder eine in den rohrförmigen oberen Schenkel (2a) des Trennbügels (2) eingebaute Druckfeder (15') ist.

8. Liegebox-Aufstallung nach Anspruch 7, **dadurch gekennzeichnet,** daß die Druckfeder (15')an einem Ende an einem festen Widerlager (17) im oberen Schenkel (2a) des Trennbügels (2) abgestützt ist und mit dem anderen Ende ein in Längsrichtung dieses Schenkels (2a) verschiebbares Druckstück (18) beaufschlagt, das stirnseitig aus dem Schenkel (2a) heraus gegen eine Stützfläche an der Halterung (3) drückt.

## Claims

1. Stable or byre stall-partitioning for large livestock, especially cows, in which the adjacently disposed bays for the animals are each time separated off from one another by means of a separating device, which consists of a support (1) fastened at the animal head end of the stable or byre to the stall floor (4) and projecting upwardly therefrom and of a separating barrier (2), which is mounted on this support and in its normal use setting extends at a spacing above the stall floor (4) in a plane perpendicular thereto as well as substantially parallel to the longitudinal direction of the bay and over a large part of the length of the bay, characterised thereby that each separating barrier (2) is at the support end mounted to the support (1) to be pivotable about a pivot axis (5) substantially perpendicular to the stall floor (4) and is held in its normal use setting by a spring force (8) dimensioned for the maintenance of the function of the separating barrier (2) as a dividing element between adjacent bays, and that each separating barrier is pivotable out of this use setting to both sides against this spring force.

2. Stable or byre stall-partitioning according to claim 1, characterised thereby that the mount (3) comprises a four-cornered inner pipe portion (6), which is of square cross-section and rigidly connected with the support (1), as well as a square four-cornered outer pipe portion (7), which rotatably surrounds the inner pipe portion and to which the barrier (2) is mounted, wherein the side bisectors of the four-cornered outer pipe portion (7) coincide with the angle bisectors of the four-cornered inner pipe portion (6) in the relative setting of these four-cornered pipe portions (6, 7) corresponding to the normal use setting of the barrier (2) and the four-cornered pipe portions (6, 7) are resiliently retained in this relative setting by members (8) of rubber-elastic material inserted between the corners of the four-cornered outer pipe portion (7) and the respective oppositely disposed sides of the four-cornered inner pipe portion (6).

3. Stable or byre stall-partitioning according to claim 1, characterised thereby that the mount comprises a torsion axle which defines the pivot axis and which is fixed at one end relative to the support and connected thereto at the other end.

4. Stable or byre stall-partitioning according to one or more of the preceding claims, characterised thereby that the separating barrier (2) is additionally pivotable up out of its normal use setting parallel to its plane against a spring force (15, 15') and about a rotational axis (13, 13') substantially parallel to the stall floor (4).

5. Stable or byre stall-partitioning according to claim 4, characterised thereby that the separating barrier (2) is borne at the mount to be rotatable about the rotational axis (13, 13') as well as guided parallelly to its plane and is held in its normal use setting against an abutment (14, 14') by a spring installed between the barrier and the mount (3).

6. Stable or byre stall-partitioning according to claim 5, characterised thereby that the spring is a tension spring (15) extending between the upper limb (2a) of the separating barrier (2) and the mount (3).

7. Stable or byre stall-partitioning according to claim 5, characterised thereby that the spring is a compression spring (15') installed in the tubular upper limb (2a) of the separating barrier (2).

8. Stable or byre stall-partitioning according to claim 7, characterised thereby that the compression spring (15') is supported at one end at a fixed counterbearing (17) in the upper limb (2a) of the separating barrier (2) and acts at the other end on a pressure member (18), which is displaceable in longitudinal direction of this limb (2a) and which at the front end presses out of the limb (2a) against a support surface of the holder (3).

## Revendications

1. Installation de stabulation à stalles, pour le gros bétail, notamment pour les vaches, dans lequel les stalles juxtaposées sont délimitées les unes par rapport aux autres par un dispositif de séparation constitué d'un montant (1) fixé au sol (4) de la stalle à l'extrémité du côté de la tête de l'animal et en faisant saillie vers le haut et d'un étrier (2) de séparation, monté sur le montant et s'étendant, en sa position normale d'utilisation, à distance au-dessus du sol (4) de la stalle, dans un plan sensiblement perpendiculaire à ce sol et sensiblement parallèle à la direction longitudinale de la stalle, sur une grande partie de la longueur de la stalle, caractérisée en ce que chaque étrier (2) de séparation est monté, du côté du montant, tournant sur le montant (1) par rapport à un axe (5) de rotation sensiblement perpendiculaire au sol (4) de la stalle et est maintenu en sa position normale d'utilisation par une force (8) élastique proportionnée pour maintenir la fonction de l'étrier (2) de séparation en tant que qu'organe de séparation entre les stalles adjacentes, et en ce que chaque étrier de séparation peut, à l'encontre de cette force élastique, tourner des deux côtés au-delà de cette position d'utilisation.

2. Installation de stabulation à stalles suivant la revendication 1, caractérisée en ce que la pièce de fixation (3) comporte un tronçon tubulaire (6) intérieur à quatre pans relié rigidement au montant (1) et un tronçon (7) tubulaire extérieur carré à quatre pans, qui l'entoure avec possibilité de tourner et sur lequel est monté l'étrier (2), les médiatrices des côtés du tronçon (7) tubulaire extérieur à quatre pans coïncidant avec les bissectrices du tronçon (6) tubulaire intérieur à quatre pans en la position relative de ces tronçons tubulaires à quatre pans correspondant à la position normale d'utilisation de l'étrier (2) de séparation, et les tronçons (6, 7) tubulaires à quatre pans étant maintenus élastiquement en cette position relative par des pièces (8) en matériau ayant l'élasticité du caoutchouc insérées entre les sommets du tronçon (7) tubulaire extérieur à quatre pans et les côtés opposés du tronçon (6) tubulaire intérieur à quatre pans.

3. Installation de stabulation à stalles suivant la revendication 1, caractérisée en ce que la pièce de fixation comporte un axe de torsion fixé à une extrémité par rapport au montant et donnant à l'autre extrémité l'axe de rotation qui y est relié.

4. Installation de stabulation à stalles suivant l'une ou plusieurs des revendications précédentes, caractérisée en ce que l'étrier (2) de séparation peut en outre être relevé vers le haut parallèlement à son plan hors de sa position normale d'utilisation autour d'un axe de basculement (13, 13') sensiblement parallèle au sol (4) de la stalle.

5. Installation de stabulation à stalles suivant la revendication 4, caractérisée en ce que l'étrier (2) de séparation peut basculer autour de l'axe (13, 13') de basculement, tout en étant monté sur la pièce de manière à être guidé parallèlement à son plan, et est maintenu en sa position normale d'utilisation sur une butée (14, 14') par un ressort (15, 15') interposé entre lui et la pièce de fixation (3).

6. Installation de stabulation à stalles suivant la revendication 5, caractérisée en ce que le ressort est un ressort (15) de traction s'étendant entre la branche (2a) supérieure de l'étrier (2) de séparation et la pièce (3) de fixation.

7. Installation de stabulation à stalles suivant la revendication 5, caractérisée en ce que le ressort est un ressort (15') de compression inséré dans la branche (2a) supérieure tubulaire de l'étrier (2) de séparation.

8. Installation de stabulation à stalles suivant la revendication 7, caractérisée en ce que le ressort (15') de compression s'appuie par une extrémité sur une butée (7) rigide de l'autre branche (2a) de l'étrier (2) de séparation et charge, par l'autre extrémité, une piece (18) qui coulisse dans la direction longitudinale de cette branche (2a) sur une face d'appui de la pièce (3) de fixation.
